# FASCICULE DE BREVET EUROPEEN

(11) **EP 0 396 469 B1**
(45) Date de publication et mention de la délivrance du brevet: **08.06.1994**
(21) Numéro de dépôt: 90401190.5
(22) Date de dépôt: 03.05.1990
(51) Int. Cl.: H04N 7/00, H04N 5/08

(54) **Dispositif d'extraction d'information numérique récurrente de structure particulière à partir d'un signal de télévision**
Anordnung zur Ermittlung rekursiver digitaler Information besonderer Struktur aus einem Fernsehsignal
Apparatus for the extraction of recursive digital information having a specific structure, from a television signal

(30) Priorité: 05.05.1989 FR 8905978
(43) Date de publication de la demande: 07.11.1990
(73) Titulaire: FRANCE TELECOM, 75015 Paris (FR); Etablissement Public Télédiffusion de France, 75015 Paris (FR)
(72) Inventeur: Lanoiselee, Marc, F-35700 Rennes (FR)
(74) Mandataire: Fort, Jacques

(56) Documents cités:
- EP-A- 0 254 062

## Description

L'invention a pour objet un dispositif permettant d'extraire, d'un signal de télévision, une information numérique récurrente, se répétant en général à la fréquence de ligne, ayant une structure particulière.

L'invention trouve une application particulièrement importante constituée par l'extraction des salves numériques d'un multiplex numérique-analogique en ligne, tel que celui constituant un signal de télévision suivant l'une des normes MAC/PAQUETS, en vue de la récupération de l'information de synchronisation de ligne insérée dans ces salves.

L'information de synchronisation, insérée dans la salve numérique de chaque ligne utile et dans la ligne 625 d'un signal D-MAC ou D2-MAC, doit être récupérée pour permettre l'exploitation du signal de télévision. Or l'information de synchronisation peut être fortement altérée par des distorsions de transmission. Ces distorsions apparaissent notamment en cas de diffusion sur des réseaux terrestres, hertziens ou câbles par suite de phénomènes d'écho, de bruit et de non-linéarité. Dans une moindre mesure, les liaisons par satellite provoquent également des distorsions. Les dégradations du signal peuvent être telles que les tentatives de reconnaître directement des informations de synchronisation sont infructueuses. Des techniques connues, notamment d'égalisation, permettent de corriger les dégradations : mais le processus d'égalisation ne peut être entamé que s'il y a eu préalablement acquisition rigoureuse des salves de données numériques, étant donné que l'égalisation doit se faire à partir des données numériques et d'elles seules.

L'invention vise à fournir un dispositif permettant d'extraire une information numérique récurrente à structure particulière présente dans un signal de télévision à lignes constituées par un multiplex numérique-analogique, même dans un signal fortement dégradé, ou du moins d'indiquer son emplacement par une impulsion de localisation permettant ensuite l'extraction, par exemple par génération d'une fenêtre encadrant chaque salve.

Dans ce but, l'invention utilise la constatation que, même dans un signal de télévision très dégradé, la partie numérique du multiplex présente une structure caractéristique et particulière, que permet d'ailleurs d'observer l'examen visuel d'un oscillogramme. Dans le cas particulier d'un signal de type MAC/PAQUETS, les salves numériques du multiplex présentent, à l'état non dégradé, les caractéristiques suivantes :
- niveau de crête à crête constant, de ± 0,4 V dans le cas du D2-MAC, aux instants caractéristiques du signal, avec des transitions nombreuses,
- codage à fréquence constante (10,125 MHz dans le cas du D2-MAC), avec des transitions nombreuses,
- palier indiquant une valeur de gris, en vue du clampage, après chaque salve numérique,
- durée constante des salves numériques (10,4 »s dans le cas de la norme D2-MAC),
- récurrence ininterrompue des salves à la fréquence de ligne pendant les mêmes lignes de toutes les trames (pendant toutes les lignes d'une trame qui contiennent une partie analogique dans le cas du MAC).

Les quatre premiers caractères permettent de rechercher l'emplacement des salves numériques et le dernier caractère permet de vérifier qu'une impulsion indiquant l'emplacement de la salve (ou une fenêtre d'isolement encadrant la salve) a bien été accrochée sur les salves, et non pas sur des séquences situées dans la partie analogique de la ligne et présentant des caractères proches de ceux des salves numériques.

L'invention propose en conséquence un dispositif suivant la revendication 1.

L'invention sera mieux comprise à la lecture de la description qui suit d'un mode particulier de réalisation, destiné à être intégré à un appareil de traitement d'un signal de télévision constitué par un multiplex numérique-analogique de type MAC. La description se réfère aux dessins qui l'accompagnent, dans lesquels :
- la Figure 1 est un schéma destiné à faire apparaître le principe de fonctionnement du dispositif selon l'invention ;
- la Figure 2 est un synoptique de principe de moyens d'acquisition de signal et de génération d'impulsions utilisable dans un dispositif du genre schématisé en Figure 1 ;
- la Figure 3 est un diagramme temporel montrant l'effet du traitement par les moyens de la Figure 1 ;
- les Figures 4 et 5, similaires à la Figure 3, montrent l'effet du traitement appliqué à des signaux dont la partie image (partie analogique du signal MAC) présente des caractères proches de ceux des salves numériques après traitement, la Figure 5 faisant apparaître comment l'impulsion fournie par les moyens du genre montré en Figure 2 peut être différenciée d'une perturbation, par dérivation ;
- la Figure 6 est un schéma de principe d'un circuit permettant d'isoler les impulsions indiquant la fin des salves de données ;
- la Figure 7 montre une constitution possible du dispositif dans son ensemble.

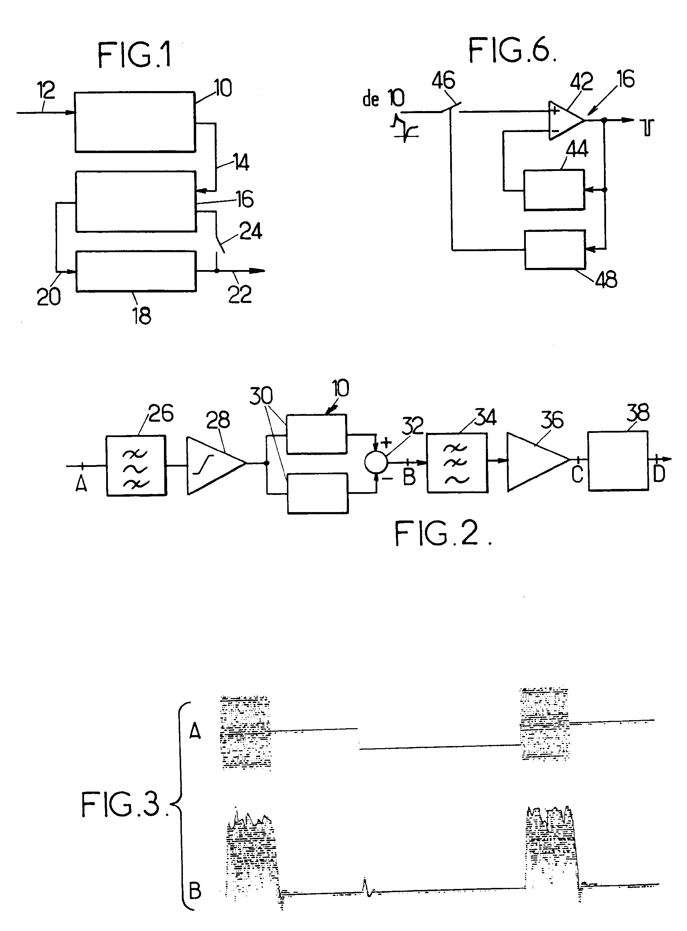

Le dispositif dont la constitution de principe est montrée en Figure 1 comporte des moyens de génération et de mise en forme d'une impulsion calibrée à la fin de chaque salve numérique d'un signal dont une description peut être trouvée dans de nombreux documents. Il sera surtout fait référence par la suite à des signaux du type D2-MAC/PAQUETS, décrits dans "Spécification du système D2-MAC/PAQUETS", septembre 1985, publiée par TELEDIFFUSION DE FRANCE. Mais le dispositif décrit est directement transposable au cas de signaux du type D-MAC ou HD-MAC.

Le dispositif de la Figure 1 peut être regardé comme constitué de trois sous-ensembles. Un premier sous-ensemble 10 est destiné à l'acquisition du signal et à la génération d'une impulsion coïncidant avec la fin de chaque salve de données. Ce sous-ensemble 10 a une constitution lui permettant de rechercher les portions du signal dont au moins le niveau de crête à crête, le codage et la durée se rapprochent des caractéristiques d'une salve de données et de les identifier, même en cas de distorsion. Ce sous-ensemble 10 reçoit donc, sur une entrée 12, le signal MAC/PAQUETS et fournit une impulsion sur une sortie 14 dès la fin d'une portion de signal pouvant constituer une salve de données.

Un second sous-ensemble 16 reçoit l'impulsion provenant de la sortie 14 et a pour fonction d'isoler les impulsions effectivement représentatives des salves, en utilisant le caractère récurrent des salves.

Enfin, un circuit 18 à boucle à verrouillage de phase, a pour fonction de maintenir l'acquisition de l'impulsion de fin de salve une fois qu'un nombre minimum d'impulsions successives, identifiées par le sous-ensemble 16, lui ont été fournies sur une entrée 20. Le circuit 18 fournit alors des impulsions de synchronisation sur sa sortie 22 et permet de maintenir l'acquisition même en cas de perte de certaines impulsions par une ligne d'asservissement 24.

Le sous-ensemble 10 de génération d'impulsions coïncidant avec la fin d'une salve montré en Figure 2 fonctionne par mise en forme à partir d'une salve numérique. Ce sous-ensemble comporte un filtre passe-bande d'entrée 26 dont les caractéristiques sont choisies en fonction de la fréquence que fait apparaître le codage des salves. Dans le cas d'un signal D2 MAC le filtre 26 aura une bande passante de 100 khz à 5 Mhz. Dans le cas d'un signal D MAC ou HD MAC le filtre 26 aura une bande passante double de 100 khz à 10 Mhz.

Le filtre passe-bande 26 est suivi d'un amplificateur-limiteur 28, destiné à écarter les effets des variations d'amplitude à l'entrée. Dans le cas d'un signal MAC/PAQUETS, pour lequel l'amplitude nominale du signal video est de 1 V, l'amplificateur-limiteur peut être prévu pour limiter le niveau d'entrée à ± 0,5 V.

Après limitation et amplification, le signal est appliqué à un jeu de deux détecteurs d'enveloppe 30 montés tête-bêche, à constante de temps faible par rapport à l'intervalle de temps de répétition des salves. Ces deux détecteurs d'enveloppe attaquent respectivement les entrées additive et soustractive d'un additionneur 32. L'ensemble ainsi constitué constitue, pour les salves numériques, notamment de type D2-MAC, un redresseur double alternance et présente un taux de réjection élevé des composantes à basse fréquence résiduelles. On peut notamment utiliser des détecteurs d'enveloppe dont le temps de décharge d'un niveau 1 au niveau 0,5 du signal video est de l'ordre de 800 ns pour un signal D2 MAC.

Les lignes A et B de la Figure 3 montrent respectivement l'allure d'un signal video d'entrée au contenu image constant sur toute la durée de la ligne (en A sur la Figure 2) et le signal correspondant obtenu en B, à la sortie de l'additionneur 32. On voit que les salves numériques se traduisent, en B, par des portions en créneau approximatif.

Le reste du sous-ensemble 10 est prévu pour générer, à partir de ce créneau approximatif, un front descendant ayant des caractéristiques relativement stables et indépendantes de la nature des données de la salve numérique.

Pour cela, le sous-ensemble 10 comporte encore un filtre passe-bas 34, ayant une fréquence de coupure d'environ 800 kHz, suivi d'un amplificateur-limiteur 36. Ces deux composants atténuent fortement les irrégularités d'amplitude que présente le créneau au point B.

Dans certains cas, le dispositif qui vient d'être décrit permet à lui seul d'obtenir un front descendant suffisamment stable. La présence du palier de gris, qui, dans un signal MAC, sépare le front descendant (auquel le filtre passe-bas fait subir une légère intégration, ce front correspondant aux dernières données numériques transmises), permet de réaliser un compromis entre la nécessité de bien séparer le front descendant du début de la partie analogique (signal de chrominance) en conservant un filtrage efficace.

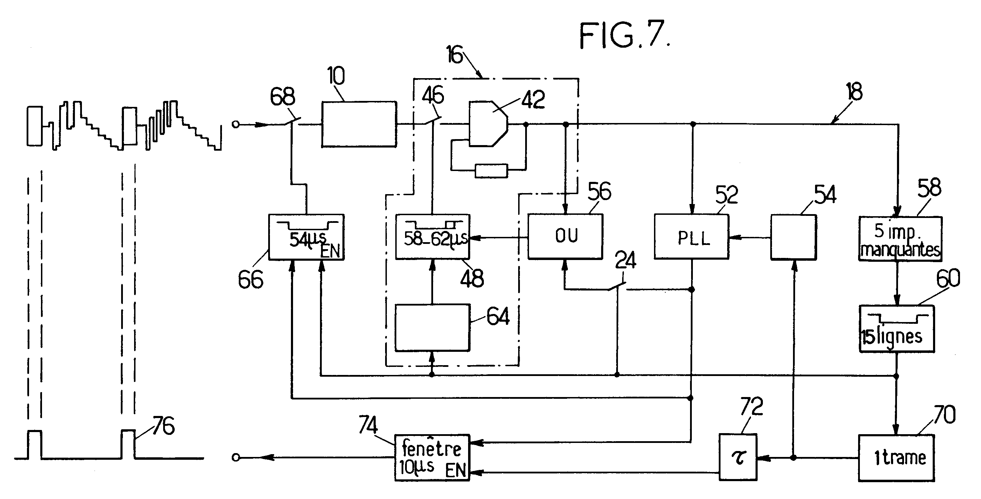

Toutefois, pour pallier l'effet des irrégularités du créneau, notamment en cas de passages prolongés sur un des trois états du codage duobinaire du D2-MAC ou du HD-MAC, le sous-ensemble 10 montré en Figure 2 comprend encore un étage constitué d'un circuit quasi-dérivateur 38 assurant une fonction de filtrage passe-haut, avec une fréquence de coupure de l'ordre de 4 kHz. Ce circuit quasi-dérivateur peut être constitué simplement par un montage RC. Il permet d'améliorer le pouvoir de séparation entre parasites tels que celui indiqué en 50 sur la ligne D de la figure 5, et front descendant par l'exploitation d'un caractère de la salve numérique, à savoir sa durée constante de 10,4 »s, qui est également celle du créneau.

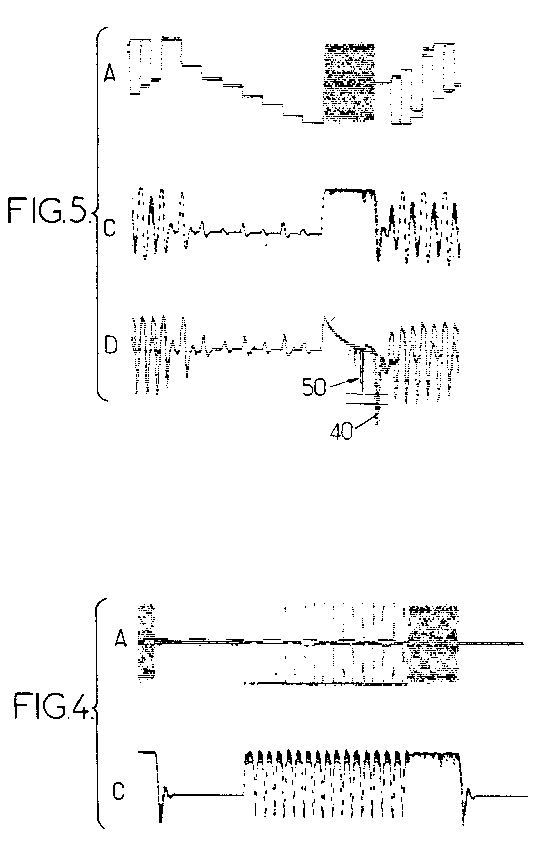

Il faut remarquer que, dans le cas d'un signal de type MAC/PAQUETS, il est exclu de générer une impulsion utilisable par mise en forme à partir du front montant des créneaux. En effet, l'identification d'un front impose que le signal ait un contenu homogène à la fois avant et après le front. Cette condition est toujours réalisée pour le front arrière, dans le cas d'un signal de type MAC/PAQUETS, puisque l'amplitude de crête à crête de la salve numérique est bien déterminée, ainsi que le niveau du palier de gris. Il n'en est pas de même pour le front avant : ce dernier peut faire suite à un niveau d'amplitude maximale, généré par une image très dense et contrastée, aussi bien qu'à un niveau de suppression. Les Figures 4 et 5 montrent, dans ces deux cas, l'allure du signal aux points A et C du circuit. Sur la Figure 4, il y a disparition pratiquement complète du front avant alors que le front arrière reste discernable. La ligne D sur la Figure 5 montre, en 40, l'impulsion obtenue à la sortie du quasi-dérivateur 38.

Pour augmenter encore le pouvoir séparateur du dispositif de la Figure 2, il serait possible d'y ajouter un ensemble de filtrage supplémentaire entre salves de données constitué d'une ligne à retard de 64 »s (du rée d'une ligne). Mais ce surcroît de complexité n'est en général pas nécessaire, car l'insuffisance éventuelle de pouvoir séparateur du sous-ensemble 10 est prise en compte par le circuit 18 qu'on décrira plus loin.

Le sous-ensemble d'isolement 16 utilise la récurrence ininterrompue des impulsions à retenir, à une fréquence égale à la fréquence ligne pour isoler les impulsions de fin de salve numérique et rejeter les impulsions de forme similaire qui pourraient survenir pendant les intervalles de chrominance ou de luminance. Ce sous-ensemble recherche l'impulsion d'ordre n au bout d'un temps égal à la période de ligne, après réception de l'impulsion d'ordre n-1. Cette recherche sera infructueuse aussi longtemps que l'impulsion d'ordre n-1 n'est pas une impulsion représentant effectivement la fin d'une salve de données.

Le sous-ensemble montré schématiquement en Figure 6 comprend un comparateur d'entrée 42 à ajustage automatique de sa tension de seuil par une boucle de réaction 44. Les impulsions d'entrée provenant du sous-ensemble 10 sont appliquées au comparateur 42 par l'intermédiaire d'un commutateur 46 fermé au repos. Lorsqu'une impulsion de valeur inférieure au seuil fourni par la boucle 44 est détectée, le comparateur 42 fournit un créneau de sortie qui déclenche un monostable 48 d'ouverture du commutateur 46. La durée de maintien du monostable est légèrement supérieure à la différence entre la période de ligne et la durée d'une salve de données. Aucun signal perturbateur ne peut être appliqué au comparateur 42 pendant les périodes de maintien du monostable qui, une fois le dispositif accroché, recouvrent les durées des signaux analogiques. Dans la pratique, la durée du monostable 48 peut être de 58 »s dans le cas du MAC/PAQUETS.

Le générateur de seuil de la boucle 44 est prévu pour fournir une tension de seuil qui s'ajuste sur l'amplitude des crêtes négatives du signal, reflétée par la sortie du comparateur. Ce générateur de seuil a une constante de temps choisie pour réaliser un compromis entre les variations possibles d'amplitude des crêtes négatives détectées par le comparateur 42 et les irrégularités affectant les créneaux et pouvant se traduire par des impulsions.

Dans la pratique, le générateur à adaptation de la valeur de seuil peut avoir une constante de temps de 2 »s pour la charge, 2 ms pour la décharge.

Le sous-ensemble de la Figure 6 présente, en contrepartie de l'avantage d'une bonne immunité aux perturbations pendant les phases de présence du signal analogique, l'inconvénient de ne plus pouvoir assurer la sélection des impulsions 40 qui suivent une impulsion de fin de salve qui n'est pas détectée et de pouvoir rester accroché sur des impulsions provenant d'un signal récurrent en ligne, parasite pour le résultat cherché, provenant de la partie analogique, tel qu'une mire de barre. Mais, dans le premier cas, l'interruption de fonctionnement est palliée par la boucle à verrouillage de phase, comme on le verra plus loin. Dans le second cas, il y a décrochage du dispositif dès le début de l'intervalle de suppression de trame, c'est-à-dire au bout d'un intervalle de temps bref, ne pouvant dépasser 20 ms, sauf lorsque le signal contient du télétexte, auquel cas deux trames peuvent être nécessaires.

La constitution complète du dispositif peut être celle montrée en Figure 7 où est représenté le circuit à boucle de verrouillage de phase 18.

Cette boucle a pour fonction de permettre au dispositif de conserver l'acquisition de la salve de données tout en "décrochant" rapidement dès le début de l'intervalle de suppression trame s'il y a eu accrochage sur un signal perturbateur recurrent dans la partie vidéo de la trame (partie analogique du multiplex).

Pour cela, le circuit comporte une boucle à verrouillage de phase ou PLL 52 ayant une constante de boucle ajustable à l'une ou l'autre de deux valeurs par un élément 54. Les deux valeurs sont par exemple égales à 20 ms, c'est-à-dire la période de trame, et à 300 »s, pour un motif qui sera exposé plus loin.

La sortie de la boucle 52 et celle du comparateur 42 attaquent des entrées respectives d'une porte OU 56 en amont de l'entrée de validation du monostable 48. En cas d'absence d'impulsion 40 pendant la durée de fermeture du commutateur 46, la PLL 52 redéclenche le monostable 48 (à condition qu'elle ait eu le temps de se synchroniser, ce qui prend une quinzaine de lignes).

Pour provoquer le décrochage en fin de trame après accrochage erroné sur la partie vidéo, le circuit comprend des moyens d'ouverture de boucle en cas d'absence d'un nombre prédéterminé d'impulsions consécutives, cinq par exemple. Sur la Figure 7, ces moyens comprennent un compteur 58 d'impulsions consécutives manquantes. En cas d'absence, le compteur applique un signal de déclenchement à un monostable 60 de durée suffisante (15 lignes par exemple) pour que la PLL se resynchronise par dérive de phase dans le sens d'un retard. Le créneau de sortie du monostable 56 est appliqué :
- au commutateur 24 pour l'ouvrir et interdire le déclenchement du monostable 48 par la PLL 52 ; le monostable 48 est alors uniquement déclenché par le comparateur 42,
- au circuit 64 de sélection de la constante de temps du monostable 48, donnant à celle-ci une valeur minimale (58 »s par exemple) en vue d'une nouvelle acquisition par le comparateur,
- à l'entrée de validation d'un monostable 66 pour ouvrir un commutateur 68 placé à l'entrée des premiers moyens 10 pendant approximativement une durée de ligne moins la durée de salve numérique (54 »s par exemple),
- à un détecteur d'absence de décrochage 70 prévu pour maintenir sur sa sortie un signal à partir du moment où il n'a reçu aucun créneau du monostable 60 pendant une période correspondant à une trame plus quelques lignes (26 lignes par exemple). La sortie de 70 est reliée directement à l'entrée de commande de l'élément 54 pour sélectionner la constante de boucle longue.

Le dispositif de la Figure 7 est prévu pour générer, à partir des impulsions isolées et confirmées, des fenêtres encadrant les salves numériques. Pour cela, il comprend un générateur de fenêtre constitué par un monostable 74 de 10 »s dont l'entrée de validation est reliée à la sortie du détecteur 70 par un élément de retard 72 tel qu'un circuit RC fournissant un retard d'une centaine de lignes et l 'entrée de déclenchement reçoit les signaux d'horloge provenant de la PLL 52.

On voit que la vérification du caractère correct de la synchronisation est constatée par l'absence de décrochage pendant l'intervalle de suppression trame. A partir de là, la PLL fournit en permanence des fenêtres stables 76 d'encadrement des salves de données numériques après augmentation de la constante de temps de boucle qui passe de 300 »s à 20 ms. Il subsiste cependant une gigue résiduelle qui est fonction des différentes configurations possibles en fin de salves et de leur fréquence d'apparition.

Pour tenir compte de ce phénomène, des moyens complémentaires prenant en compte les fins de salve les plus tardives peuvent être prévus. Dans le cas contraire, il faut conserver une marge de sécurité de part et d'autre de la largeur nécessaire à l'égalisation afin que la fenêtre contienne les salves. En fait seule l'incertitude sur le début de salve doit être prise en compte dans le cas où la fenêtre peut être fermée durant l'instant de clamp de la ligne MAC. Dans le cas illustré, une marge de sécurité de 100 ns serait nécessaire pour absorber la gigue maximale de 100 ns de crête à crête ; elle conduirait à des fenêtres de 10,2 »s. Dans le cas illustré, des fenêtres de 10 »s sont révélées suffisantes.

## Revendications

1. Dispositif permettant l'extraction de salves d' information numérique récurrentes à la fréquence de ligne à partir d'un signal de télévision, ladite information ayant, à l'état non dégradé, certains au moins des caractères suivants :
- niveau de crête à crête constant dans la salve,
- codage à fréquence constante dans la salve,
- palier de gris après chaque salve,
- durée constante des salves numériques,
- récurrence des salves à la fréquence de ligne pendant certaines lignes d'une trame,
caractérisé en ce qu'il comporte:
- des premiers moyens (10) d'acquisition des salves et de génération d'une impulsion coïncidant avec la fin de la salve, par comparaison en ligne entre les caractéristiques courantes du signal et certains au moins desdits caractères des salves numériques,
- des seconds moyens (16) pour isoler lesdites impulsions en vérifiant que la fréquence de récurrence de ladite impulsion correspond à la fréquence de récurrence de ligne, et
- des moyens (18) à boucle à verrouillage de phase pour conserver l'acquisition de l'impulsion identifiée par les secons moyens (16) une fois qu'elle s'est répétée au moins un nombre prédéterminé de fois successives, lors de pertes temporaires.

2. Dispositif selon la revendication 1, caractérisé en ce que les premiers moyens (10) comportent en série un filtre passe-bande d'entrée (26) ayant une bande passante correspond à celle de l'information récurrente, un amplificateur (28) et un ensemble de deux détecteurs d'enveloppe se comportant en redresseur double alternance pour la salve numérique (30, 32) suivi d'un filtre passe-bas (34).

3. Dispositif selon la revendication 2, caractérisé en ce que le redresseur double alternance (32) est constitué par deux détecteurs d'enveloppe (30) montés tête bêche, à constante de temps faible par rapport à l'intervalle de temps de répétition de l'information récurrente et un soustracteur (32) dont les entrées reçoivent les sorties des détecteurs d'enveloppe.

4. Dispositif selon l'une quelconque des revendications précédentes, destiné à fournir un signal à l'issue des salves numériques du multiplex numérique-analogique d'un signal de télévision MAC/PAQUETS, caractérisé en ce que lesdits premiers moyens (10) comportent également un étage de sortie constitué par un circuit (38) pseudo-dérivateur assurant une fonction de filtrage passe-haut, avec une fréquence de coupure de l'ordre de 4 kHz.

5. Dispositif selon l'une quelconque des revendications précédentes, caractérisé en ce que les seconds moyens (16) comprennent un comparateur (42) à ajustage automatique de tension de seuil, recevant les impulsions de sortie des premiers moyens (10) par l'intermédiaire d'un commutateur (46) et comprennent un monostable (48) déclenché par la sortie du comparateur et ouvrant le commutateur (46) pendant une durée légèrement supérieure à la différence entre la période de ligne et la durée de ladite information récurrente.

6. Dispositif selon la revendication 5, caractérisé en ce qu'il comprend un générateur (44) de tension de seuil à adaptation automatique au niveau de sortie du comparateur ayant une constante de temps plus élevée pour l'augmentation du seuil que pour la diminution du seuil.

7. Dispositif selon la revendication 5 ou 6, destiné à fournir une fenêtre encadrant les salves de données d'un signal de télévision MAC/PAQUETS, caractérisé en ce que les moyens à boucle à verrouillage de phase comprennent une boucle proprement dite (52) ayant une constante de boucle commutable entre une valeur approximativement égale à la période de trame et une valeur plus faible d'au moins un ordre de grandeur, couplée aux seconds moyens de façon à ouvrir le commutateur (46) occasionnellement pendant les intervalles de suppression trame.

8. Dispositif selon la revendication 7, caractérisé en ce qu'il comprend des moyens (54) de commutation de constante de boucle commandés par un détecteur (70) d'absence de décrochage de synchronisation, qui maintient sur sa sortie un signal à partir du moment où il n'a reçu aucun créneau des seconds moyens (16) pendant un laps de temps correspondant à une trame plus quelques lignes.

9. Dispositif selon la revendication 8, caractérisé en ce que la boucle à verrouillage de phase (52) proprement dite et la sortie du comparateur (42) attaquent les deux entrées d'une porte OU (56) attaquant l'entrée de validation du monostable (48) et la boucle à verrouillage de phase est mise hors circuit par un interrupteur (24) commandé par lesdits moyens (54) de commutation.

## Patentansprüche

1. Vorrichtung, die die Extraktion von sich mit der Zeilenfrequenz wiederholenden Bündeln digitaler Information ausgehend von einem Fernsehsignal gestattet, wobei die Information im nicht verschlechterten Zustand bestimmte wenigstens der folgenden Merkmale aufweist:
- konstanter Spitze-Spitze-Pegel im Bündel,
- konstante Frequenzkodierung im Bündel,
- Grauschulter nach jedem Bündel,
- konstante Dauer der digitalen Bündel,
- Wiederholung der Bündel mit der Zeilenfrequenz während bestimmter Zeilen eines Halbbildes,
dadurch **gekennzeichnet**, daß sie umfaßt:
- erste Mittel (10) zur Erfassung der Bündel und zur Erzeugung eines mit dem Ende des Bündels zusammenfallenden Impulses durch Vergleich in der Zeile zwischen den laufenden Merkmalen des Signals und bestimmten wenigstens der Merkmale der digitalen Bündel,
- zweite Mittel (16) zum Isolieren der Impulse durch Verifizierung, daß die Wiederholfrequenz des Impulses der Zeilenwiederholfrequenz entspricht, und
- Mittel (18) mit Phasenverriegelungsschleife zum Erhalten der Erfassung des durch die zweiten Mittel (16) identifizierten Impulses, wenn er sich einmal wenigstens eine vorbestimmte Anzahl von aufeinanderfolgenden Malen wiederholt hat, zur Zeit von temporären Verlusten.

2. Vorrichtung nach Anspruch 1, dadurch **gekennzeichnet,** daß die ersten Mittel (10) in Reihe ein Eingangsbandpaßfilter (26), dessen Durchlaßbereich demjenigen der sich wiederholenden Information entspricht, einen Verstärker (28) und einen Satz von zwei Hüllkurvendetektoren umfassen, die sich als Doppel-Halbwellengleichrichter für das digitale Bündel verhalten (30, 32), gefolgt von einem Tiefpaßfilter (34).

3. Vorrichtung nach Anspruch 2, dadurch **gekennzeichnet,** daß der Doppel-Halbwellengleichrichter (32) aus zwei entgegengesetzt geschalteten Hüllkurvendetektoren (30) mit kleiner Zeitkonstante in bezug auf das Wiederholzeitintervall der sich wiederholenden Information, und einem Subtrahierglied (32) besteht, dessen Eingänge die Ausgangssignale der Hüllkurvendetektoren empfangen.

4. Vorrichtung nach einem beliebigen der vorhergehenden Ansprüche, bestimmt zum Liefern eines Signals am Ende der digitalen Bündel des Digital-Analog-Multiplex eines MAC/PAQUETS-Fernsehsignals, dadurch **gekennzeichnet,** daß die ersten Mittel (10) ebenso eine Ausgangsstufe umfassen, die aus einem Pseudodifferenzierkreis (38) besteht, der eine Hochpaßfilterfunktion sicherstellt, mit einer Grenzfrequenz in der Größe von 4 kHz.

5. Vorrichtung nach einem beliebigen der vorhergehenden Ansprüche, dadurch **gekennzeichnet,** daß die zweiten Mittel (16) einen Komparator (42) mit automatischer Schwellwertspannungseinstellung umfassen, der die Ausgangsimpulse der ersten Mittel (10) mittels eines Schalters (46) empfängt, und einen Monovibrator (48) umfassen, der durch das Ausgangssignal des Komparators ausgelöst wird und den Schalter (46) während einer Dauer etwas größer als die Differenz zwischen der Zeilenperiode und der Dauer der sich wiederholenden Information öffnet.

6. Vorrichtung nach Anspruch 5, dadurch **gekennzeichnet,** daß sie einen Schwellwertspannungsgenerator (44) zur automatischen Anpassung an den Ausgangssignalpegel des Komparators umfaßt, der eine größere Zeitkonstante für die Erhöhung des Schwellwerts als für die Herabsetzung des Schwellwerts aufweist.

7. Vorrichtung nach Anspruch 5 oder 6, bestimmt zum Liefern eines Fensters, das die Datenbündel eines MAC/PAQUETS-Fernsehsignals einrahmt, dadurch **gekennzeichnet,** daß die Mittel mit Phasenverriegelungsschleife eine eigentliche Schleife (52) umfassen, die eine Schleifenkonstante aufweist, die zwischen einem Wert etwa gleich der Halbbildperiode und einem um wenigstens eine Größenordnung kleineren Wert schaltbar ist, verbunden mit den zweiten Mitteln derart, daß der Schalter (46) gelegentlich während der Halbbildunterdrückungsintervalle geöffnet wird.

8. Vorrichtung nach Anspruch 7, dadurch **gekennzeichnet,** daß sie Schleifenkonstanten-Schaltmittel (54) umfaßt, die durch einen Detektor (70) für das Fehlen einer Synchronisationsabweichung gesteuert sind, der an seinem Ausgang ein Signal ausgehend von dem Zeitpunkt hält, zu dem er keinen Auftastimpuls der zweiten Mittel (16) während eines Zeitraums entsprechend einem Halbbild plus einige Zeilen empfangen hat.

9. Vorrichtung nach Anspruch 8, dadurch **gekennzeichnet,** daß die eigentliche Phasenverriegelungsschleife (52) und der Ausgang des Komparators (42) auf die beiden Eingänge eines ODER-Gliedes (56) gehen, das auf den Validationseingang des Monovibrators (48) geht, und die Phasenverriegelungsschleife durch einen Schalter (24) ausgeschaltet wird, der duch die Schaltmittel (54) gesteuert wird.

## Claims

1. Device for extracting bursts of digital data, recurrent at line frequency, from a television signal, the said data having, in the non-decomposed state, at least some of the following features:
- constant peak to peak level in the burst,
- constant frequency coding in the burst,
- grey porch after each burst,
- constant digital burst duration,
- recurrence of the bursts at line frequency during certain lines of a frame,
characterised in that it includes:
- first means (10) for acquiring the bursts and for generating a pulse coincident with the end of the burst, by on-line comparison between the current signal characteristics and at least some of the said digital burst features,
- second means (16) for isolating the said pulses by verifying that the recurrence frequency of the said pulse corresponds to the line recurrence frequency, and
- phase lock loop means (18) for maintaining acquisition of the pulse-identified by the second means (16) once it has been repeated at least a predetermined number of successive times, during temporary losses.

2. Device according to Claim 1, charactarised in that the first means (10) have in series an input pass-band filter (26) having a pass-band corresponding to that of the recurrent data, an amplifier (28) and an assembly of two envelope detectors behaving as a full-wave rectifier for the digital burst (30, 32) followed by a low-pass filter (34).

3. Device according to Claim 2, characterised in that the full-wave rectifier (32) is composed of two envelope detectors (30) mounted head to tail, with a time constant which is low in comparison with the repetition time interval of the recurrent data, and a subtractor (32) whose inputs receive the outputs of the envelope detectors.

4. Device according to any one of the previous claims, intended to provide a signal at the conclusion of the digital bursts of the digital-analogue multiplex of a MAC/PACKETS television signal, characterised in that the said first means (10) also have an output stage composed of a pseudo-differentiating circuit (38) providing a high-pass filtering function, with a cut-off frequency of around 4 kHz.

5. Device according to any one of the preceding claims, characterised in that the second means (16) comprise a comparator (42) with automatic adjustment of threshold voltage, receiving the output pulses from the first means (10) through a switch (46) and comprise a monostable (48) triggered by the output of the comparator and opening the switch (46) for a duration slightly greater than the difference between the line period and the duration of the said recurrent data.

6. Device according to Claim 5, characterised in that it comprises a threshold voltage generator (44) with automatic matching to the comparator output level and having a higher time constant for increasing the threshold than for decreasing the threshold.

7. Device according to Claim 5 or 6, intended to provide a window framing the bursts of MAC/PACKETS television signal data, characterised in that the phase lock loop means comprise a loop proper (52) having a loop constant switchable between a value approximately equal to the frame period and a value at least one order of magnitude smaller, coupled to the second means so as to open the switch (46) occasionally during frame blanking intervals,

8. Device according to claim 7, characterised in that it comprises means (54) for switching the loop constant controlled by an absence detector (70) for loss of synchronisation, which maintains a signal at its output from the time it has received no strobe from the second means (16) for a time lapse equivalent to one frame plus a few lines.

9. Device according to Claim 8, characterised in that the phase lock loop (52) proper and the output of the comparator (42) drive the two inputs of an OR gate (56) driving the enable input of the monostable (48) and the phase lock loop is taken out of circuit by a switch (24) controlled by the said switching means (54).
